# EUROPEAN PATENT APPLICATION

(11) **EP 2 061 165 A2**
(43) Date of publication of application: **20.05.2009**
(21) Application number: 08156104.5
(22) Date of filing: 13.05.2008
(51) Int. Cl.: H04H 20/02, H04H 20/74

(54) **Bidirectional gap filler apparatus for receiving broadcasting signals and relaying communication signals and method of transmitting the signal**

(30) Priority: 14.11.2007 KR 20070116184
(71) Applicant: Electronics and Telecommunications Research Institute, Daejeon-city (KR); Roswin, Inc., Cheonan-city Chungcheon-namdo (KR)
(72) Inventor: Han, Sung Min, Daejeon-city (KR); Ryu, Joon Gyu, Seo-gu, Daejeon-city (KR); Chang, Dae Ig, Seo-gu, Daejeon-city (KR); Lee, Ho Jin, Daejeon-city (KR); Park, Chang Wook, Cheonan-city, Chungcheon-namdo (KR); Lee, Jae Myung, Cheonan-city, Chungcheon-namdo (KR); Son, Ho Won, Cheonan-city, Chungcheon-namdo (KR)
(74) Representative: Betten & Resch

(57) **Abstract**

Provided are a bidirectional gap filler apparatus for receiving broadcasting signals and relaying communication signals and a method of transmitting the signals. According to the present invention, the bidirectional gap filler receives broadcasting signals and downlink communication signals, transmits the signals again as wireless signals, and receives wireless signals to transmit uplink communication signals. Here, directional antennas installed to respectively have fixed directivities and repeating units respectively connected to the directional antennas are used. Accordingly, excellent communication and transmission/reception of the broadcasting signals are available even in a RF signal shaded area.

## Description

### CROSS-REFERENCE TO RELATED PATENT APPLICATION

This application claims the benefit of Korean Patent Application No. 10-2007-0116184, filed on November 14, 2007, in the Korean Intellectual Property Office, the disclosure of which is incorporated herein in its entirety by reference.

### BACKGROUND OF THE INTENTION

### 1. Field of the Invention

The present invention relates to a bidirectional gap filler apparatus for receiving broadcasting signals and relaying communication signals which allows excellent communication and transmission/reception of the broadcasting signals even in a RF signal shaded area, and a method of transmitting the signals.

The present invention is derived from a research project supported by the Information Technology (IT) Research & Development (R&D) program of the Ministry of Information and Communication (MIC) and the Institute for Information Technology Advancement (IITA) [2006-S-020-02, Development of Satellite and Terrestrial Convergence Technology for Internet Service on High-speed Mobile Vehicles]

### 2. Description of the Related Art

In conventional satellite broadcasting and satellite communications, a terminal can receive or communicate with a broadcast only when Line of Sight (LOS) is secured. In order to overcome such a limitation, a one-way gap filler has been introduced.

The one-way gap filler for receiving a broadcast is a minor output re-transmission station which receives radio waves from a transmission station and re-transmits the radio waves so that a mobile station such as a terminal can receive satellite broadcasting or can receive a broadcast from an area where radio waves are blocked by high buildings in a satellite mobile communication environment. In particular, according to a Digital Sound Broadcasting (DSB) method used in Europe which is for use with a mobile station, data is modulated by using an Orthogonal Frequency Division Multiplexing (OFDM) method, a kind of a multi carrier wave modulation, and radio waves in the air. In this case, a minor output re-transmission station is built on the roof of buildings and the re-transmission station receives radio waves that have been transmitted from a ground transmission station or from a satellite to re-transmit the radio waves. As a result, the mobile station is able to receive excellent broadcasting signals in a RF signal shaded area by using properties of the OFDM method that is strong for a multi-path. Moreover, when a direct wave cannot be received, a receiver of the re-transmission station only receives a re-transmitted wave. However, when a direct wave can be received, the direct wave and the re-transmitted wave can be added together to be received by the re-transmission station, thereby providing excellent reception signals.

Currently, the one-way gap filler as described above is applied to a system performing satellite broadcasting such as satellite Digital Multimedia Broadcasting (DMB) so as to allow fixed terminals or portable/vehicle terminals existing in a Non-LOS (NLOS) environment to receive satellite broadcasting.

However, since the one-way gap filler is used to provide one-way broadcasting service, a bidirectional gap filler technology, to overcome communication difficulties which may occur in the NLOS environment while performing bidirectional satellite communication, has not been introduced and applied.

In other words, the conventional one-way gap filler technology is only limited to the field of satellite broadcasting and thus performs only one-way transmission through amplifying reception signals or converting frequency so that bidirectional communication does not exist in this field. Accordingly, use of the conventional one-way gap filler technology is not only impossible in satellite broadcasting but also in bidirectional satellite communication.

Ultimately, a bidirectional gap filler technology which can be used in transmitting and receiving communication signals and broadcasting signals even in a RF signal shaded area is required for satellite broadcasting and bidirectional satellite communication.

### SUMMARY OF THE INTENTION

The present invention provides a bidirectional gap filler apparatus for receiving broadcasting signals and relaying communication signals which allows excellent communication and transmission/reception of the broadcasting signals even in a RF signal shaded area, and a method of transmitting the signals.

According to an aspect of the present invention, there is provided a bidirectional gap filler apparatus for receiving broadcasting signals and relaying communication signals, the apparatus including: a satellite interface unit which receives downlink communication signals and broadcasting signals and transmits uplink communication signals; a signal converter which converts the received signals into downlink optical signals to transmit and converts transmitted uplink optical signals into the uplink communication signals; at least two repeating units which receive the transmitted downlink optical signals to O/E (optical/electrical) convert the received downlink optical signals into electric signals and E/O (electrical/optical) converts received electric signals into the uplink optical signals; and at least two directional antennas which are respectively connected to the repeating units and installed to have fixed directivities, convert the O/E converted electric signals into wireless signals to transmit, and convert received wireless signals into electric signals to output.

According to another aspect of the present invention, there is provided a method of transmitting downlink signals in a bidirectional gap filler apparatus, the bidirectional gap filler apparatus for receiving broadcasting signals and relaying communication signals, the method including: receiving downlink communication signals and broadcasting signals; converting the received signals into downlink optical signals and transmitting the downlink optical signals; receiving the transmitted downlink optical signals in at least two repeating units and O/E converting the received downlink optical signals into electric signals; and converting the O/E converted electric signals into wireless signals and transmitting the wireless signals through directional antennas respectively connected to the repeating units and installed to have fixed directivities.

According to another aspect of the present invention, there is provided a method of transmitting uplink signals in a bidirectional gap filler apparatus, the bidirectional gap filler apparatus for receiving broadcasting signals and relaying communication signals, the method including: receiving wireless signals and converting the wireless signals into electric signals through at least two directional antennas installed to respectively have fixed directivities; E/O converting the converted electric signals into uplink optical signals and transmitting the uplink optical signals by using repeating units respectively connected to the directional antennas; converting the transmitted uplink optical signals into uplink communication signals; and transmitting the converted uplink communication signals.

### BRIEF DESCRIPTION OF THE DRAWINGS

The above and other features and advantages of the present invention will become more apparent by describing in detail exemplary embodiments thereof with reference to the attached drawings in which:
FIG. 1 is a conceptual diagram of a bidirectional gap filler apparatus in a transparent form, according to an embodiment of the present invention;
FIG. 2A is a block diagram of a bidirectional gap filler apparatus, according to an embodiment of the present invention;
FIG. 2B is a block diagram of a signal converter of FIG. 2A;
FIG. 2C illustrates an optical signal relaying unit of FIG. 2A;
FIG. 3 illustrates that the bidirectional gap filler apparatus of FIG. 2A is installed to a tunnel;
FIG. 4 is a flowchart illustrating a method of transmitting a downlink signal in a bidirectional gap filler apparatus, according to an embodiment of the present invention; and
FIG. 5 is a flowchart illustrating a method of transmitting an uplink signal in a bidirectional gap filler apparatus, according to an embodiment of the present invention.

### DETAILED DESCRIPTION OF THE INTENTION

Hereinafter, the present invention will be described more fully with reference to the accompanying drawings, in which exemplary embodiments of the invention are shown.

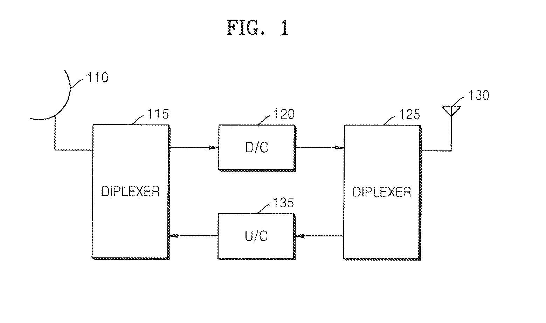

FIG. 1 is a conceptual diagram of a bidirectional gap filler apparatus in a transparent form, according to an embodiment of the present invention.

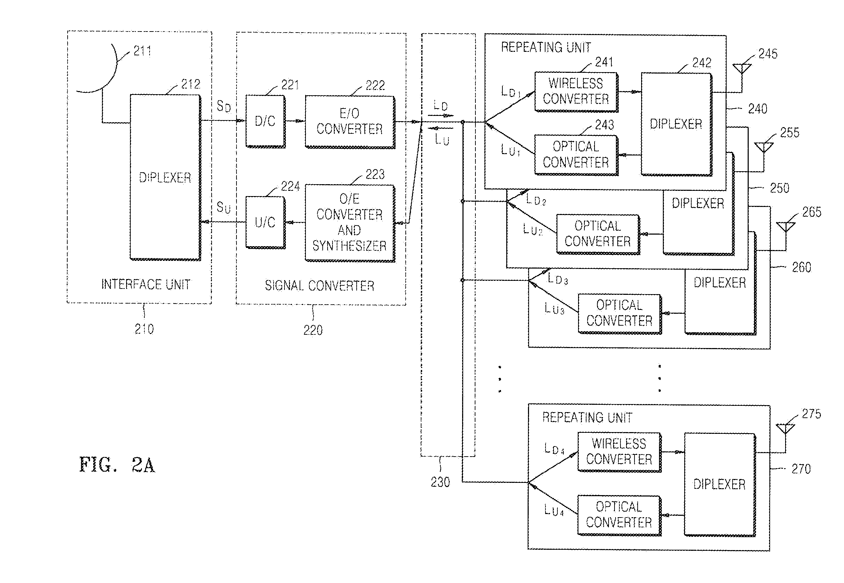

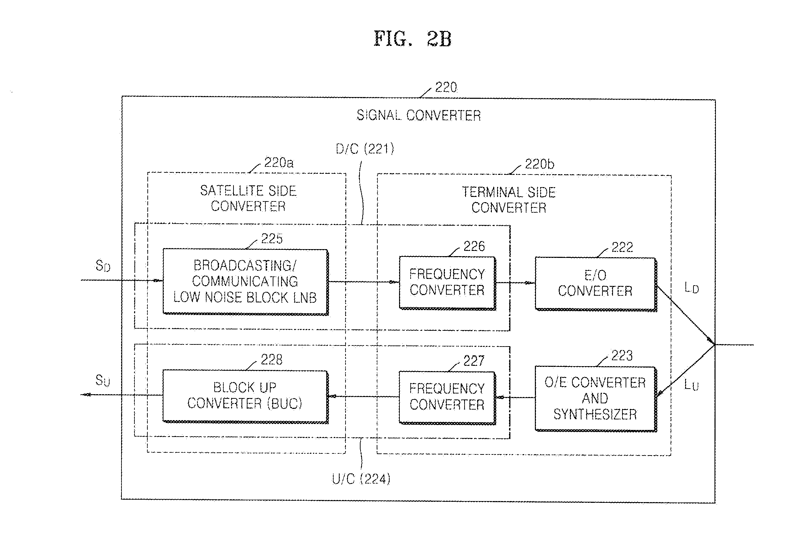

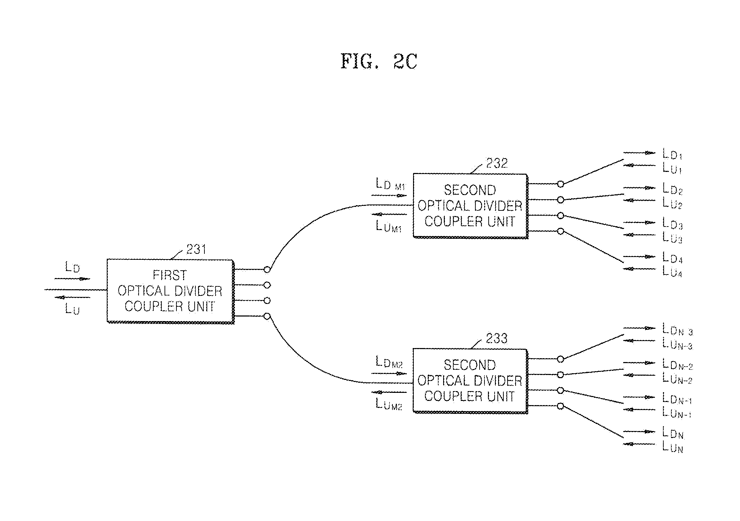

Referring to FIG. 1, the bidirectional gap filler apparatus in a transparent form basically includes a satellite antenna 110, a diplexer 115, a down converter (D/C) 120, a diplexer 125, an antenna 130, and an up converter (U/C) 135. It should be considered that such a configuration is simplified to suitably describe a 'transparent form' of the bidirectional gap filler apparatus. The detailed configuration of the bidirectional gap filler apparatus is described later with reference to FIG. 2.

Here, unlike a one-way gap filler apparatus in a general 're-generative form', the bidirectional gap filler apparatus is formed to have a 'transparent form.'

The 're-generative form' denotes the case in which during re-transmitting of the content of a signal after the gap filler apparatus receives the signal, the reception signal is demodulated and then the demodulated signal is modulated again to a desired signal so as to re-transmit contents of the reception signal.

On the other hand, the 'transparent form' denotes the case in which during re-transmitting of content of a signal after the gap filler apparatus receives the signal, the gap filler apparatus is realized in order not to need demodulation and modulation as above.

Thus, here, when the bidirectional gap filler apparatus uses the 're-generative form', it is required that signals output from the D/C 120 are demodulated and decoded using a demodulator and a decoder and then the demodulated and decoded signals are stored in a buffer. Thereafter, the stored signals are again modulated and encoded using a modulator and an encoder during receiving and re-transmitting of satellite signals. After all the above processes are completed, frequencies of the modulated and encoded signals are converted into high frequency bands through a separate up converter and the signals in which frequencies thereof are converted can be re-transmitted to a terminal.

Moreover, in receiving wireless signals of the terminal and re-transmitting such signals, signals output from the diplexer 125 are not directly transmitted to U/C 135. Instead, it is required that after frequencies of the signals output from the diplexer 125 are converted into low frequency bands through a down converter, the signals in which frequencies thereof are converted are demodulated and decoded using a demodulator and decoder and then the demodulated and decoded signals are stored in a buffer. Thereafter, the stored signals are again modulated and encoded using a modulator and an encoder. After all the above processes are completed, the modulated and encoded signals can be input to the U/C 135.

Accordingly, the gap filler apparatus using the re-generative form is complicated since there are a number of internal modules and thus, a cost of the apparatus increases.

However, since the bidirectional gap filler apparatus here uses the 'transparent form', other additional devices for demodulation, decoding, modulation, and encoding such as the demodulator, decoder, modulator, and encoder are not needed unlike the gap filler apparatus using the re-generative form. Thus, when the bidirectional gap filler apparatus using the transparent form is installed to a RF signal shaded area, internal modules can be simplified and a cost of the apparatus can be reduced. Also, the bidirectional gap filler apparatus using the transparent form can be easily realized and installed.

In terms of the operation of the bidirectional gap filler apparatus, the satellite antenna 110 receives a signal in a frequency band of Ka (20∼30 GHz)/Ku (11∼12GHz) from a satellite. The reception signal is input to the D/C 120 via the diplexer 115. The D/C 120 down converts frequency of the signal in the Ka/Ku band into the Industrial, Scientific and Medical (ISM) band. The frequency down converted signal is amplified through an amplifier (not shown) and is transmitted to each terminal sequentially through the diplexer 125 and the antenna 130 as a wireless signal inluded in the ISM band.

On the other hand, the signal in the ISM band received from the terminals through the antenna 130 is transmitted to the U/C 135 through the diplexer 125. The U/C 135 up converts frequency of the signal in the ISM band into the Ka band. The frequency up converted signal is amplified through an amplifier (not shown) and is transmitted to a satellite sequentially through the diplexer 115 and the satellite antenna 110.

Here, the band for communicating with the terminals is limited to the ISM band, because the case where frequency cannot be allocated in a frequency band, except for the ISM band is considered. When the bidirectional gap filler apparatus is commercialized and applied, frequency can be allocated and thus other frequency bands, except for the ISM band, can be used to communicate with the terminals.

FIG. 2A is a block diagram of a bidirectional gap filler apparatus, according to an embodiment of the present invention.

Referring to FIG. 2A, the bidirectional gap filler apparatus includes a satellite interface unit 210, a signal converter 220, an optical signal relaying unit 230, a plurality of repeating units 240, 250, 260, and 270, and a plurality of directional antennas 245, 255, 265, and 275. Here, the bidirectional gap filler apparatus may be formed of a Gap filler Satellite Interface Module (GSIM) and Gap filler Terminal Interface Modules (GTIMs), the GSIM including the satellite interface unit 210 and the signal converter 220 and the GTIMs including the plurality of the repeating units 240, 250, 260, and 270 and the plurality of the directional antennas 245, 255, 265, and 275.

The satellite interface unit 210 receives a downlink communication signal and a broadcasting signal from a satellite and transmits an uplink communication signal to a satellite. The downlink communication signal, broadcasting signal, and uplink communication signal are all in the Ka/Ku band.

The satellite interface unit 210 generally includes a satellite antenna 211 and a diplexer 212 for transmitting to and receiving from a satellite.

The satellite antenna 211 receives a radio wave from a satellite to convert the radio wave into an electric signal and receives the electric signal to convert into a radio wave, thereby transmitting the radio wave to a satellite.

The diplexer 212 is used to eliminate interference between the downlink communication and the broadcasting signal received from a satellite and interference between the uplink communication signal and other signals.

The signal converter 220 converts the downlink communication signal and the broadcasting signal received from the satellite into downlink optical signals and converts an uplink optical signal input thereto into the uplink communication signal.

The signal converter 220 incudes a down converter (D/C) 221, an electric/optical (E/O) converter 222, an optical/electric (O/E) converter and synthesizer 223, and an up converter (U/C) 224.

The D/C 221 corresponds to the D/C 120 of FIG. 1 and down converts frequency of the signal in the Ka/Ku band into the ISM band.

The E/O converter 222 converts an input electric signal into a downlink optical signal.

The O/E converter and synthesizer 223 extracts electric signals from input optical signals and synthesizes the extracted electric signals, thereby outputting the synthesized signals.

The U/C 224 corresponds to the U/C 135 of FIG. 1 and up converts frequency of the signal in the ISM band into the Ka band.

The optical signal relaying unit 230 transmits the downlink optical signal output from the signal converter 220 to the plurality of the repeating units 240, 250, 260, and 270 and transmits the uplink optical signal transmitted from the plurality of the repeating units 240, 250, 260, and 270 to the signal converter 220.

The repeating units 240, 250, 260, and 270 are connected to the signal converter 220 through the optical signal relaying unit 230. The case relating to the repeating unit 240 from among the repeating units is considered below.

The one repeating unit 240 is connected to one directional antenna 245. The repeating unit 240 receives the downlink optical signal L_{D1} to O/E convert L_{D1} into an electric signal and transmits the electric signal to the directional antenna 245. Also, the repeating unit 240 E/O converts the electric signal input from the directional antenna 245 into the uplink optical signal. The repeating unit 240 forms a kind of a repeater which receives a signal and re-transmits the signal.

The repeating unit 240 includes a wireless converter 241, a diplexer 242, and an optical converter 243.

When the downlink optical signal L_{D1} is received, the wireless converter 241 O/E converts L_{D1} into an electrical signal and converts the O/E converted signal into an electromagnetic wave for a wireless signal in the ISM band. That is, the wireless converter 241 performs RF conversion and frequency conversion to transmit a wireless signal toward the terminal.

The diplexer 242 receives an electromagnetic wave signal from the wireless converter 241 and transmits the signal to the directional antenna 245 connected thereto. Moreover, the diplexer 242 transmits the electromagnetic wave input from the directional antenna 245 to the optical converter 243. Thus, the diplexer 242 prevents interference between the signals.

The optical converter 243 converts the electromagnetic wave signal transmitted through the diplexer 242 into an optical signal and outputs the converted optical signal to the optical signal relaying unit 230.

The directional antenna 245 is an antenna designed to strongly radiate a radio wave in a specific direction or to receive a radio wave radiated from a specific direction.

The directional antenna 245 is connected to the one repeating unit 240 and is installed to have a directivity different to the other directional antennas 255, 265, and 275. Also, the directional antenna 245 receives an electric signal from the repeating unit 240 to convert the electric signal into a wireless signal, thereby transmitting the converted wireless signal and converts all received wireless signals into electric signals to output the converted electric signals to the repeating unit 240. More specifically, the directional antenna 245 receives the electromagnetic wave signal converted in the wireless converter 241 through the diplexer 242 to convert the electromagnetic wave signal into a radio wave, thereby transmitting the radio wave and receives the radio wave of the wireless signal to convert the radio wave into the electromagnetic wave signal, thereby transmitting the electromagnetic wave signal to the diplexer 242.

The directional antenna 245 may be a directional multi-band antenna which can receive signals in various bands. The directional antenna 245 transmits and receives signals in the ISM band. For reference, the ISM band denotes the frequency band of 2.4GHz and is a frequency band allocated to the industrial, scientific, and medical fields. In terms of RF, the ISM band is mainly applied for a small-scale and short distance data communication such as Bluetooth, wireless LAN, and Home RF.

The directional antenna 245 may be installed to face the transmission direction of the wireless signal of the terminal to be communicated therewith. If the terminal to be communicated is set to move from right to left of the directional antenna 245 and the repeating unit 240 including the directional antenna 245 and the terminal is set to transmit a wireless signal from right to left, the directional antenna 245 should be installed to face the right side.

Here, the repeating unit 240 may determine whether the wireless signal received through the directional antenna 245 connected thereto is noise, that is, whether the signal is to be transmitted to a satellite as the uplink communication signal, based on the magnitude of the wireless signal and a front to back ratio of the directional antenna 245, that is, a ratio of the magnitude of a radio wave transmitted to the front or received from the front to the magnitude of a radio wave transmitted to the back or received from the back. In this case, only when it is determined that the received wireless signal is not noise, the repeating unit 240 E/O converts an electric signal of the received wireless signal into an optical signal through the optical converter 243 and transmits the converted optical signal to the optical signal relaying unit 230.

Each element included in the bidirectional gap filler apparatus of FIG. 2A is described in more detail with reference to FIGS. 2B and 2C.

FIG. 2B is a block diagram of the signal converter 220 of FIG. 2A.

Referring to FIG. 2B, the signal converter 220 includes a satellite side converter 220a and a terminal side converter 220b.

The satellite side converter 220a includes a broadcasting (Ku)/communicating (Ka) low noise block (LNB) 225 and a block up converter (BUC) 228.

Here, the Ku/Ka LNB 225 is a kind of LNB converter. LNBs are generally used to receive a signal from a broadcast satellite and amplify a satellite reception signal in a relatively high frequency band to convert the signal into in a low frequency band.

Also, the BUC 228 is used to transmit an uplink link signal toward a satellite and receives a signal in a relatively lower frequency band to convert the signal into a signal in a higher frequency band.

The satellite side converter 220a converts the downlink communication signal and the broadcasting signal in the Ka/Ku band received from the satellite interface unit 210 into signals in the L-band (950∼1750MHz) by using the Ku/Ka LNB 225 and converts the signals in the L-band (950∼1750MHz) or in the S-band (2500∼3300MHz) input from the terminal side converter 220b into the uplink communication signal in the Ka band by using the BUC 228.

The terminal side converter 220b includes a frequency converter 226, the E/O converter 222, the O/E converter and synthesizer 223, and a frequency converter 227.

The terminal side converter 220b converts the signal in the L-band input from the Ku/Ka LNB 225 included in the satellite side converter 220a into a signal in an intermediate frequency signal (within 300MHz) included in a low frequency band by using the frequency converter 226 and mixes the intermediate frequency signal with the downlink optical signal having the wavelength of 1550 nm by using the E/O converter 222, thereby transmitting the downlink optical signal.

In addition, the terminal side converter 220b receives the uplink optical signal having the wavelength of 1310nm input from the repeating units 240, 250, 260, and 270 through the O/E converter and synthesizer 223, extract electric signals by using the O/E converter and synthesizer 223, synthesizes the extracted electric signals, and transmits the synthesized signals to the frequency converter 227. The frequency converter 227 converts the frequency of the synthesized signals into a frequency suitable to input to the BUC 228. Since the frequency suitable to input to the BUC 228 is generally in the L-band or the S-band, the frequency converter 227 converts the frequency of the synthesized signals into the frequency in the L-band or the S-band and transmits the frequency converted signal to the BUC 228.

FIG. 2C illustrates the optical signal relaying unit 230 of FIG. 2A.

Referring to FIG. 2C, the optical signal relaying unit 230 includes a first optical divider coupler unit 231 and a number of second optical divider coupler units 232 and 233.

The first optical divider coupler unit 231 and the second optical divider coupler units 232 and 233 may be optical divider couplers. The optical divider coupler is a device which divides an optical signal input from one input terminal into various output terminals, combines optical signals from a plurality of input terminals, and outputs the combined signal to one output terminal.

The first optical divider coupler unit 231 divides the downlink optical signal converted in the signal converter 220 into at least two first optical signals and combines the input optical signals, thereby transmitting the uplink optical signal to the signal converter 220.

One of second optical divider coupler units 232 and 233 receives each of the first optical signals to divide the first optical signals into at least two second optical signals, thereby transmitting the second optical signals to the repeating units 240, 250, 260, and 270 and combines the uplink optical signals input from the repeating units 240, 250, 260, and 270 to transmit the combined signals to the first optical divider coupler unit 231.

Of course, the plurality of the repeating units 240, 250, 260, and 270 can be directly connected to one signal converter 220 using an optical cable. However, in this case, optical loss and noise flow may increase. Accordingly, in order to reduce optical loss and noise flow, the optical signal relaying unit 230 may be formed by using a multi-drop method in which a small number of the first optical divider coupler unit 231 which may be a 2:1, 4:1, or 8:1 optical divider coupler is connected to the back of the signal converter 220 and various numbers of the second optical divider coupler units 232 and 233 are inserted into the front of the plurality of the repeating units 240, 250, 260, and 270. In this case, although the plurality of the repeating units 240, 250, 260, and 270 is installed in a distance from several km to several tens km, unnecessary signal loss can be prevented during transmitting signals by the bidirectional gap filler. Thus, when the bidirectional gap filler is installed by using a multi-drop method, the signals received from a satellite can be easily transmitted to a location far from the location received.

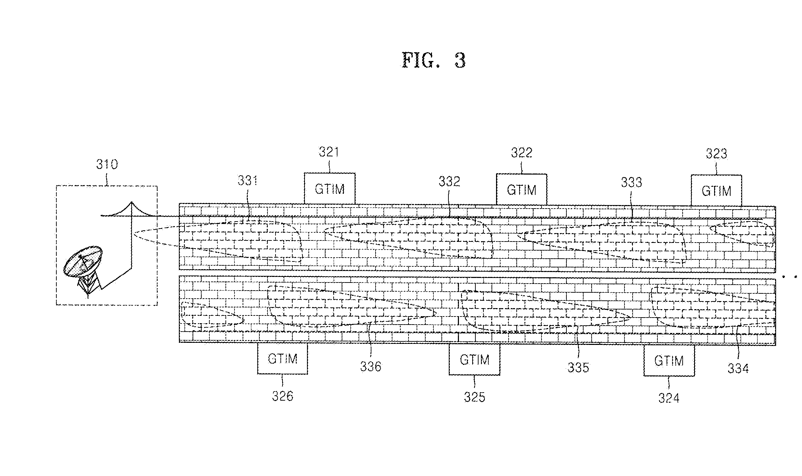

FIG. 3 illustrates that the bidirectional gap filler apparatus of FIG. 2A is installed to a tunnel.

Referring to FIG. 3, the bidirectional gap filler apparatus is formed of a GSIM 310 corresponding to the satellite interface unit 210 and the signal converter 220 and GTIMs 321, 322, 323, 324, 325, and 326 corresponding to the plurality of the repeating units 240, 250, 260, and 270 and directional antennas 245, 255, 265, 275 connected to the repeating units. Also, the directional antennas of the GTIMs 321, 322, 323, 324, 325, and 326 are installed in both directions of the tunnel.

The directional antennas connected to the GTIMs 321, 322, 323, 324, 325, and 326 have a Half-Power Beam Width (HPBW) of approximately 30° (10°- 60°). Firstly, the GTIMs 321, 322, and 323 are installed in one-way direction. Also, since it is assumed that FIG. 3 is in a tunnel, the GTIMs 324, 325, and 326 are additionally installed in an opposite direction of the GTIMs 321, 322, and 323 in order to offset affect to the bidirectional gap filler apparatus by signal transmission of a train passing through an opposite railway of the tunnel. Here, the directional antennas of the GTIMs 321, 322, and 323 and the GTIMs 324, 325, and 326 disposed inside the tunnel are installed to face opposite directions from each other. Also, the directional antennas are installed to two trains (terminals) (not shown) to be respectively moved in opposite directions in the tunnel, in advance.

Then, when two terminals move in opposite directions in the tunnel, even if one GTIM receives signals from the two terminals at the same time, the GTIM can recognize each of the signals separatively.

In other words, one GRIM receives the signal of the terminal which transmits the signal suitable for the direction of its directional antenna and the magnitude of the received signal is greater than that of the signal received from terminal moving in other direction so that the signal of the specific terminal can be recognized.

Ultimately, one GTIM determines whether the terminal transmitting the received signal is a target terminal for transmission and reception by using the magnitude of the received signal and thus the GTIM communicates with the terminal when the terminal entering in a specific direction approaches near the GTIM.

Yellow half-moon regions 331, 332, 333, 334, 335, and 336 indicate signal transmission regions of the directional antennas of the GTIMs 321, 322, 323, 324, 325, and 326.

Also, in FIG. 3, each of the GTIMs 321, 322, 323, 324, 325, and 326 only transmits and receives wireless signals having a fixed type of polarization and thus can easily identify the terminals to be transmitted to and received from.

As in FIG. 3, it is assumed that after the bidirectional gap filler is installed, the terminals located in the trains receive both signals in forward and inverse directions at the same time through the antennas for the gap filler. Here, when the magnitude of the signal in an inverse direction is greater than that of in a forward direction, the terminal may not find a desired signal due to signal interference. Moreover, although the GTIM should recognize a return link signal of the terminal moving in a forward direction, the GTIM recognizes the signal of the terminal entering in a reverse direction and thus the transmission and reception signal of the terminal moving in a forward direction may be determined as noise. Here, polarization of the transmission and reception signal of the terminal moving in a forward direction differs from polarization of the transmission and reception signal of the terminal entering in a reverse direction and thus isolation between both signals can be additionally secured by 30dB or more. Moreover, polarizations of the transmission and reception signals of the terminals moving in a forward direction and a reverse direction are different to each other so as for both signals to have the maximum isolation.

For example, when the transmission and reception signal of the terminal moving in a forward direction has vertical polarization from among linear polarizations, the transmission and reception signal of the terminal moving in a reverse direction has horizontal polarization. In addition, when the transmission and reception signal of the terminal moving in a forward direction has right hand circular polarization (RHCP) from among circular polarizations, the transmission and reception signal of the terminal moving in a reverse direction has left hand circular polarization (LHCP). Accordingly, isolation between the transmission and reception signals of the terminals moving in a forward direction and a reverse direction increases.

Therefore, isolation between the transmission and reception signals of the terminals moving in a forward direction and a reverse direction is 55dB or more, by adding 25dB of a front to back ratio and 30dB of polarization isolation.

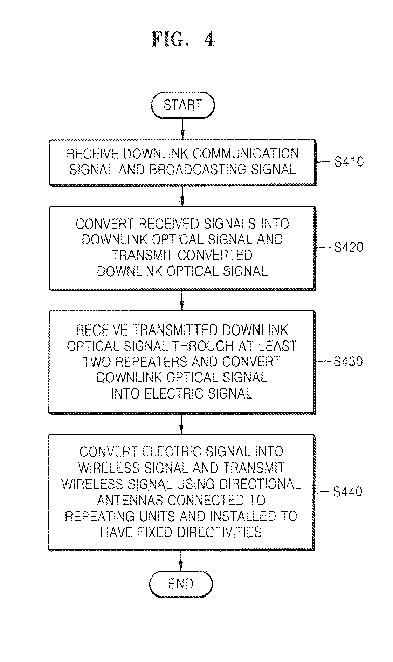

FIG. 4 is a flowchart illustrating a method of transmitting the downlink signal in the bidirectional gap filler apparatus, according to an embodiment of the present invention.

Referring to FIG. 4, a method of transmitting the downlink signal in the bidirectional gap filler apparatus to receive a broadcasting signal and to relay a communication signal is illustrated.

For reference, the operations performing the method of transmitting the downlink signal in the bidirectional gap filler apparatus are illustrated with reference to FIGS. 2A through 2C.

First, the downlink communication signal and the broadcasting signal are received in operation 410. Then, the received signals are converted into the downlink optical signal and the converted downlink optical signals are transmitted in operation 420. Then, the transmitted downlink optical signal is received and the received downlink optical signal is converted into an electric signal in operation 430 through at least two repeaters. The electric signal that is O/E converted is converted into the wireless signal and the wireless signal is transmitted to the terminals through the directional antennas respectively connected to the repeating units and installed to have fixed directivities in operation 440 so that the broadcasting signal and the communication signal received from a satellite are down transmitted to the terminals.

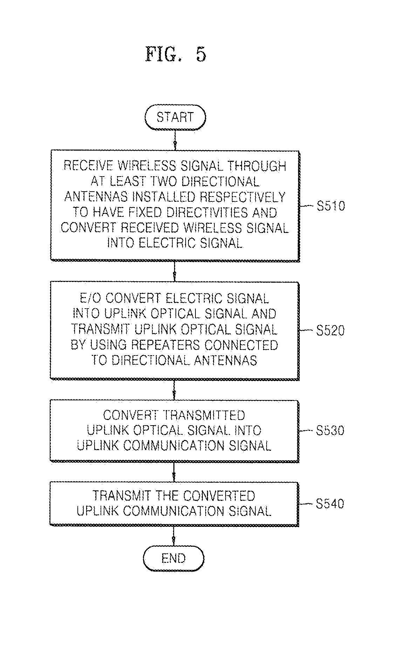

FIG. 5 is a flowchart illustrating a method of transmitting the uplink signal in the bidirectional gap filler apparatus, according to an embodiment of the present invention.

Referring to FIG. 5, a method of transmitting the uplink signal in the bidirectional gap filler apparatus to receive a broadcasting signal and to relay a communication signal is illustrated.

For reference, the operations of performing the method of transmitting the uplink signal in the bidirectional gap filler apparatus are illustrated with reference to FIGS. 2A through 2C.

Firstly, the wireless signal is received and is converted into the electric signal through at least two directional antennas installed respectively to have fixed directivities in operation 510. Then, the converted electric signal is E/O converted into the uplink optical signal by using repeaters respectively connected to the directional antennas and the uplink optical signal is transmitted in operation 520. Then, the transmitted uplink optical signal is converted into the uplink communication signal in operation 530. Then, the converted uplink communication signal is transmitted in operation 540, thereby uplink transmitting the wireless signal received from the terminal to a satellite.

According to the present invention, not only receiving satellite broadcasting but also bidirectional communication using a satellite is possible. In this case, excellent transmission and reception of a signal is available even in a RF signal shaded area such as a tunnel. Therefore, receiving of one-way direction satellite broadcasting and transmitting/receiving of a bidirectional satellite communication signal are possible in a RF signal shaded area.

In addition, according to the present invention, the directional antennas are applied to the terminal interface units of the bidirectional gap filler apparatus and the terminal so that the bidirectional gap filler apparatus is advantageous in a multi-path fading environment. Also, a distance of a section enabling signal transmission and reception through the directional antenna of one terminal interface unit is significantly longer than a distance of a section enabling signal transmission and reception through an omnidirectional antenna in a conventional bidirectional gap filler system in which the omnidirectional antenna is installed on one side or both sides of the system.

Moreover, the directional antennas in the terminal interface units are installed in both directions to respectively have opposite directivity in a section such as a tunnel so that the bidirectional gap filler apparatus distinguishes between two terminals entering from both directions of the tunnel at the same time and can independently communicate with each of the terminals.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer system so that the computer readable code is stored and executed in a distributed fashion.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A bidirectional gap filler apparatus for receiving broadcasting signals and relaying communication signals, the apparatus comprising:
a satellite interface unit which receives downlink communication signals and broadcasting signals and transmits uplink communication signals;
a signal converter which converts the received signals into downlink optical signals to transmit and convert transmitted uplink optical signals into the uplink communication signals;
at least two repeating units which receive the transmitted downlink optical signals to O/E (optical/electrical) convert the received downlink optical signals into electric signals and E/O (electrical/optical) convert received electric signals into the uplink optical signals; and
at least two directional antennas which are respectively connected to the repeating units and installed to have fixed directivities, convert the O/E converted electric signals into wireless signals to transmit, and convert received wireless signals into electric signals to output.

2. The apparatus of claim 1, wherein the directional antennas are respectively installed to face a transmission direction of the wireless signals of the terminal to be communicated therewith.

3. The apparatus of claim 1 or 2, wherein the repeating units respectively E/O convert the received electric signals into the uplink optical signals based on the magnitudes of the wireless signals received from the directional antennas respectively connected to the repeating units and front to back ratios of the directional antennas.

4. The apparatus of claim 1, 2 or 3, wherein the downlink communication signals and the broadcasting signals are received through Ku and Ka bands and the uplink communication signals are transmitted through Ku and Ka bands.

5. The apparatus of one of claims 1 to 4, wherein the signal converter comprises:
a satellite side converter which converts the received downlink communication signals and the broadcasting signals into signals in the L-band and converts received signals in the L-band or the S-band into the uplink communication signals; and
a terminal side converter which converts the signals converted to the L-band into the downlink optical signals and converts the transmitted uplink optical signals into the signals in the L-band or S-band received in the satellite side converter.

6. The apparatus of one of claims 1 to 5, further comprising:
a first optical divider coupler unit which divides the downlink optical signals converted in the signal converter into at least two first optical signals, couples received optical signals, and transmits the uplink optical signals to the signal converter; and
at least one second optical divider coupler unit which receives each of the first optical signals to divide into at least two second optical signals, thereby transmitting the second optical signals to each of the repeating units and couples the uplink optical signals received from the repeating units to transmit the coupled signals to the first optical divider coupler unit.

7. The apparatus of one of claims 1 to 6, wherein each of the directional antennas transmits and receives wireless signals having a fixed type of polarization.

8. The apparatus of claim 7, wherein the fixed type of polarization is one of horizontal linear polarization and vertical linear polarization.

9. The apparatus of claim 7, wherein the fixed type of polarization is one of left hand circular polarization (LHCP) and right hand circular polarization (RHCP).

10. The apparatus of one of claim 1 to 9, wherein the directional antennas transmit and receive the wireless signals through the Industrial, Scientific and Medical (ISM) band.

11. A method of transmitting downlink signals in a bidirectional gap filler apparatus, the bidirectional gap filler apparatus for receiving broadcasting signals and relaying communication signals, the method comprising:
receiving downlink communication signals and broadcasting signals;
converting the received signals into downlink optical signals and transmitting the downlink optical signals;
receiving the transmitted downlink optical signals and O/E converting the received downlink optical signals into electric signals through at least two repeating units; and
converting the O/E converted electric signals into wireless signals and transmitting the wireless signals through directional antennas respectively connected to the repeating units and installed to have fixed directivities.

12. The method of claim 11, wherein the directional antennas are respectively installed to face a transmission direction of the wireless signals of the terminal to be communicated therewith.

13. The method of claim 11 or 12, wherein the downlink communication signals and the broadcasting signals are received through Ku and Ka bands.

14. The method of claim 11, 12 or 13, wherein in the transmitting of the wireless signals, each of the directional antennas transmits wireless signals having a fixed type of polarization.

15. The method of claim 14, wherein the fixed type of polarization is one of horizontal linear polarization and vertical linear polarization.

16. The method of claim 14, wherein the fixed type of polarization is one of left hand circular polarization (LHCP) and right hand circular polarization (RHCP).

17. The method of one of claims 11 to 16, wherein the directional antennas transmit and receive the wireless signals through the Industrial, Scientific and Medical (ISM) band.

18. A method of transmitting uplink signals in a bidirectional gap filler apparatus, the bidirectional gap filler apparatus for receiving broadcasting signals and relaying communication signals, the method comprising:
receiving wireless signals and converting the wireless signals into electric signals through at least two directional antennas installed to respectively have fixed directivities;
E/O converting the converted electric signals into uplink optical signals and transmitting the uplink optical signals by using repeating units respectively connected to the directional antennas;
converting the transmitted uplink optical signals into uplink communication signals; and
transmitting the converted uplink communication signals.

19. The method of claim 18, wherein the directional antennas are respectively installed to face a transmission direction of the wireless signals of the terminal to be communicated therewith.

20. The method of claim 18 or 19, wherein the E/O converting the converted electric signals into the uplink optical signals is performed based on the magnitudes of the received wireless signals and front to back ratios of the directional antennas which receive the received wireless signals.

21. The method of claim 18, 19 or 20, wherein the uplink communication signals are transmitted through Ku and Ka bands.

22. The method of one of claims 18 to 21, wherein each of the directional antennas receives wireless signals having a fixed type of polarization.

23. The method of claim 22, wherein the fixed type of polarization is one of horizontal linear polarization and vertical linear polarization.

24. The method of claim 22, wherein the fixed type of polarization is one of left hand circular polarization (LHCP) and right hand circular polarization (RHCP).

25. The method of one of claims 18 to 24, wherein the directional antennas receive the wireless signals through the Industrial, Scientific and Medical (ISM) band.
